# EUROPÄISCHE PATENTSCHRIFT

(11) **EP 3 000 630 B1**
(45) Veröffentlichungstag und Bekanntmachung des Hinweises auf die Patenterteilung: **28.08.2019**
(21) Anmeldenummer: 15184411.5
(22) Anmeldetag: 09.09.2015
(51) Int. Cl.: B60D 1/52, B60D 1/06, B60D 1/48

(54) **TRÄGERANORDNUNG FÜR EINE ANHÄNGEKUPPLUNG ODER EINEN LASTENTRÄGER**
CARRIER ASSEMBLY FOR A TRAILER COUPLING OR A LOAD CARRIER
SYSTÈME DE SUPPORT POUR UN ATTELAGE OU UN PORTE-CHARGE

(30) Priorität: 26.09.2014 DE 102014014010; 04.12.2014 DE 102014117886
(43) Veröffentlichungstag der Anmeldung: 30.03.2016
(73) Patentinhaber: WESTFALIA - Automotive GmbH, 33378 Rheda-Wiedenbrück (DE)
(72) Erfinder: Angermann, Kay, Dr., 04720 Döbeln (DE)
(74) Vertreter: Patentanwälte Bregenzer und Reule Partnerschaftsgesellschaft mbB

(56) Entgegenhaltungen:
- EP-A1- 2 803 510
- DE-A1-102012 018 546
- DE-U1- 7 808 690

## Beschreibung

Die Erfindung betrifft eine Trägeranordnung für eine Anhängekupplung oder einen Lastenträger, als Bauteile mindestens umfassend einen Querträger zur Montage an einem Heck einer Karosserie eines Kraftfahrzeugs sowie mindestens eine an dem Querträger angeordnete Halterung für eine Anhängekupplung oder für ein Kupplungsteil eines Lastenträgers, gemäß dem Oberbegriff des Anspruchs 1.

Eine derartige Trägeranordnung ist beispielsweise in DE 78 08 690 U oder EP 2 803 510 A2 beschrieben.

Zur Verbindung von Bauteilen einer Trägeranordnung, beispielsweise des Querträgers und einer Halterung für die Anhängekupplung oder für einen Lastenträger, sind Schweißverbindungen bekannt. Weiterhin ist aus der nicht vorveröffentlichten DE 10 2013 008 328.1 eine Aufnahmehülse aus Blech vorbekannt, die einen Kragen aufweist, mit der sich die Aufnahmehülse an einem oberen Wandabschnitt eines als Querträger dienenden Profilrohrs abstützt. Diese Befestigung ist jedoch in vielen Fällen nicht ausreichend. Schweißverbindungen sind überdies für die Materialien belastend, d.h. sie führen zu Verformungen, Veränderungen des Gefüges und dergleichen anderen Problemen, die die Maßgenauigkeit und die Belastbarkeit der Trägeranordnung beeinträchtigen.

Es ist daher die Aufgabe der vorliegenden Erfindung, eine verbesserte Verbindung zwischen Bauteilen einer Trägeranordnung, von denen eines ein Trägerprofil und das andere ein zweites Bauteil darstellt, zu verbessern.

Zur Lösung der Aufgabe ist eine Trägeranordnung gemäß der technischen Lehre des Anspruchs 1 vorgesehen.

Es ist ein Grundgedanke der vorliegenden Erfindung, dass aufgrund einer Widerstandsschweißverbindung die thermische Belastung des Trägerprofils und/oder des zweiten Bauteils möglichst gering ist. Durch eine übliche Schweißung mit beispielsweise MIG- oder MAG-Schweißverfahren, kommt es zu Veränderungen im Gefüge, was beispielsweise die Maßgenauigkeit ungünstig beeinflusst. Durch das Widerstandsschweißen sind diese Einflüsse deutlich verringert.

Auch das Spannungsverhalten der Trägerstruktur, das heißt ein möglichst kontinuierlicher, unbeeinträchtigter Spannungsverlauf, beispielsweise am Tragprofil, wird dadurch günstig ermöglicht.

Es ist möglich, das Trägerprofil und/oder das zweite Bauteil mit geringer Materialstärke bzw. mit geringer Materialdicke auszustatten, weil das Widerstandsschweißverfahren nur zu geringen Verformungen oder zu gar keinen Verformungen führt. Die Trägeranordnung eignet sich hervorragend für einen Leichtbau, insbesondere mit möglichst geringen Materialwandstärken.

Die Wandstärke von beispielsweise Trägerrohren kann deutlich geringer sein. Die Geometrien und Formen sind deutlich einfacher und freier zu gestalten, dennoch aufgrund der Erfindung günstig und fest miteinander zu verbinden. Anstelle massiver Halbzeuge können leichtere, beispielsweise durch Umformung hergestellte Bauteile verwendet werden. Mithin sind also deutlich größere Freiheitsgrade gerade bei dem zweiten Bauteil, insbesondere der Halterung für die Anhängekupplung oder den Lastenträger, möglich.

Die Erfindung ermöglicht den sparsamen Einsatz von Energie, insbesondere Wärme.

Die Widerstandsschweißverbindung ist beispielsweise zwischen dem Trägerprofil und dem zweiten Bauteil unmittelbar vorhanden. Es ist aber auch möglich, dass die Widerstandsschweißverbindung zwischen anderen Komponenten hergestellt ist, dennoch aber dazu dient, das zweite Bauteil mit dem Trägerprofil zu verbinden. Beispielsweise ist es möglich, dass die Widerstandsschweißverbindung zwischen einem dritten, später noch erläuterten Bauteil, und dem zweiten Bauteil hergestellt ist, um dieses mit dem Trägerprofil fest zu verbinden.

Das Trägerprofil kann ein Profilrohr mit geschlossenem Querschnitt sein. Das Trägerprofil kann aber auch beispielsweise an einer Seite offen sein, beispielsweise im Querschnitt u-förmig oder L-förmig. Die Querschnittsgeometrie ist ebenfalls vielseitig möglich. Beispielsweise hat das Trägerprofil einen runden oder rechteckigen Querschnitt. Auch einen sonstigen, beispielsweise polygonalen Querschnitt, kann das Trägerprofil haben. Der erste und der zweite Wandabschnitt sind beispielsweise durch einen dritten Wandabschnitt miteinander verbunden. Sie können aber auch durch einen vierten Wandabschnitt miteinander verbunden sein, um so beispielsweise ein insgesamt im Querschnitt geschlossenes Profil zu bilden.

Der erste Wandabschnitt bildet beispielsweise einen oberen Wandabschnitt, der zweite Wandabschnitt einen unteren Wandabschnitt. Der erste Wandabschnitt kann aber auch einen in Fahrtrichtung vorderen, der zweite Wandabschnitt einen in Fahrtrichtung hinteren Wandabschnitt bilden. So verläuft dann beispielsweise eine Steckrichtung oder Montagerichtung des zweiten Bauteils bezüglich des Trägerprofils horizontal, während im erstgenannten Fall die Steckrichtung oder Montagerichtung des zweiten Bauteils bezüglich des Trägerprofils (bezogen auf die Einbaulage im Kraftfahrzeug) vertikal verläuft. Auch schräge Verläufe der Steckrichtung oder Montagerichtung sind ohne weiteres möglich.

Das Trägerprofil kann beispielsweise den Querträger bilden. Das Trägerprofil kann aber auch einen Längsträger bilden, der beispielsweise mit einer Längsseite einer Karosserie des Kraftfahrzeugs zu verbinden ist.

Das zweite Bauteil kann ebenfalls ein Profilbauteil sein oder ein Trägerprofil sein. Beispielsweise können auf die erfindungsgemäße Weise zwei Trägerprofile, zum Beispiel Segmente eines Querträgers, ein Querträger und ein Längsträger oder dergleichen miteinander verbunden werden.

Bevorzugt handelt es sich bei dem zweiten Bauteil um die Halterung für den Lastenträger oder die Anhängekupplung, beispielsweise einen Kupplungsarm. Der Lastenträger oder die Anhängekupplung kann lösbar an der Halterung befestigbar sein. Beispielsweise ist eine Steckverbindung vorgesehen. Eine Steckrichtung oder Montagerichtung zum Anstecken oder Einstecken des Lastenträgers oder der Anhängekupplung an oder in die Halterung kann beispielsweise vertikal verlaufen. Aber auch eine horizontale Montage, insbesondere im Falle eines Lastenträgers, ist zweckmäßig.

Bei der Halterung handelt es sich beispielsweise um eine Hülse oder ein Aufnahmerohr für eine Anhängekupplung oder ein Steckende eines Lastenträgers. Es ist aber auch möglich, dass die Halterung beispielsweise ein Schwenklager und/oder ein Schiebelager für einen Kupplungsarm oder eine Aufnahme für einen Lastenträger bildet.

Bevorzugt handelt es sich bei der Halterung um ein Blechbauteil, beispielsweise eine Hülse aus Blech.

In der Halterung ist zweckmäßigerweise eine Formschluss-Aufnahme zur formschlüssigen Verriegelung und/oder zum formschlüssigen Halt der Anhängekupplung oder des Lastenträgers an der Halterung vorgesehen. Die erfindungsgemäße Verbindung des zweiten Bauteils oder der Halterung mit dem Trägerprofil sorgt dafür, dass die Formschluss-Aufnahme thermisch nicht oder allenfalls kaum belastet wird, was der Maßgenauigkeit dient.

Eine vorteilhafte Maßnahme sieht vor, dass das zweite Bauteil, insbesondere im Bereich der Schweißverbindung, mit dem Trägerprofil kraftschlüssig und/oder formschlüssig verbunden ist.

Eine kraftschlüssige Verbindung wird beispielsweise dadurch hergestellt, dass eines der Bauteile, beispielsweise das Trägerbauteil oder das zweite Bauteil oder eben auch beide Bauteile thermisch behandelt wird oder werden, zum Beispiel erhitzt oder abgekühlt, und dann mit der jeweils anderen Komponente verbunden wird oder werden. Durch den Abkühlungsvorgang oder Erwärmungsvorgang entsteht eine Spannung, die die Bauteile zueinander hin zieht. Weiterhin kann auch ein drittes Bauteil, das später noch erläutert wird, aufgrund einer thermischen Vorbehandlung dafür sorgen, dass das Trägerprofil und das zweite Bauteil unter Spannung zueinander hin stehen.

Zur formschlüssigen Verbindung trägt vorteilhaft bei, dass ein Abschnitt des zweiten Bauteils oder des Trägerbauteils in Richtung des jeweils anderen Bauteils, nämlich des Trägerbauteils oder zweiten Bauteils, hin umgeformt ist. Dies kann beispielsweise durch eine Umkantung erfolgen. Weiterhin kann auch das bereits erwähnte dritte Bauteil dafür sorgen, dass das zweite Bauteil zu dem Trägerbauteil oder das Trägerbauteil zu dem zweiten Bauteil hin umgeformt ist.

Bevorzugt sind zur Umformung vorgesehene Abschnitte des Trägerbauteils oder des zweiten Bauteils segmentiert, um die Umformung zu erleichtern. So können beispielsweise an einer Stirnseite des zweiten Bauteils Ringsegmente vorgesehen sein, die sich leichter nach beispielsweise radial außen umformen lassen als ein geschlossener Umfang.

Eine bevorzugte Ausführungsform sieht vor, dass das zweite Bauteil und/oder das Trägerprofil der Art umgeformt sind, dass die jeweils andere Komponente in der Art einer Klammer umgriffen ist. Beispielsweise kann an dem zweiten Bauteil eine Art Maul vorgesehen sein, in die ein Innenumfang einer Öffnung am Trägerprofil eingreift. So kann beispielsweise eine Stützkontur an dem zweiten Bauteil sich an der Außenseite eines Wandabschnitts des Trägerprofils abstützen, während in den Zwischenraum ein zweiter Abschnitt eine Innenseite des Wandabschnitts des Trägerprofils stützt. Zwischen diesen Klammer-Abschnitten oder klammerartigen Abschnitten ist ein Bereich des Wandabschnitts des Trägerprofils aufgenommen.

Bevorzugt ist es, wenn das zweite Bauteil in den Zwischenraum zwischen dem ersten Wandabschnitt und dem zweiten Wandabschnitt vorsteht.

Beispielsweise kann diese Maßnahme dazu dienen, dass der in den Zwischenraum vorstehende Abschnitt des zweiten Bauteils umgeformt wird, um sich so vom Innenraum oder Zwischenraum her an der Innenseite des zweiten Wandabschnitts abstützt. Mit anderen Worten endet sozusagen das zweite Bauteil in dem Zwischenraum zwischen den Wandabschnitten.

Es ist aber auch möglich, dass das zweite Bauteil den Zwischenraum durchsetzt und dann sozusagen von dem zweiten, beispielsweise unteren oder in Fahrtrichtung hinteren Wandabschnitt her den ersten, beispielsweise oberen bzw. in Fahrtrichtung vorderen Wandabschnitt durchdringt und mit diesem verbunden ist.

Das zweite Bauteil kann beispielsweise an einer Randseite, beispielsweise an einem Längsende des Trägerprofils, angeordnet sein und von dort her in den Zwischenraum eingreifen.

Eine Variante kann aber auch vorsehen, dass an dem Trägerprofil eine Öffnung vorgesehen ist, beispielsweise an einem in Einbaulage unteren oder in Fahrtrichtung hinteren Wandabschnitt, wobei das zweite Bauteil in die Öffnung in Richtung des Zwischenraums zwischen dem ersten und dem zweiten Wandabschnitt eingreift. Es können auch zwei Öffnungen vorgesehen sein, nämlich am ersten und am zweiten Wandabschnitt, sodass das zweite Bauteil das Trägerprofil durch die beiden Öffnungen hindurch durchsetzt.

Das zweite Bauteil weist zweckmäßigerweise eine Anlagekontur, beispielsweise eine Stufe oder einen Absatz, auf und liegt mit einem Abschnitt der Anlagekontur, beispielsweise einem Schenkel oder einer Schulter an einer von dem Zwischenraum abgewandten Außenseite des zweiten Wandabschnitts an. Es ist möglich, dass dann noch immer ein Spiel zwischen beispielsweise einem Innenumfang der Öffnung und dem zweiten Bauteil vorgesehen ist. Bevorzugt ist es jedoch, wenn die Anlagekontur mit einem zweiten Abschnitt an einem Innenumfang der vorgenannten Öffnung anliegt.

Es ist an dieser Stelle auch zu bemerken, dass eine Stufenkontur möglich ist, derart, dass beispielsweise das zweite Bauteil mit einer ersten Anlagekontur an einer Außenseite des zweiten Wandabschnitts, beispielsweise unten am Querträger der Trägeranordnung, anliegt, in den Zwischenraum zwischen den beiden Wandabschnitten des Trägerprofils vorsteht und an der Innenseite des zweiten Wandabschnitts mit einer weiteren, zweiten Anlagekontur anliegt.

Eine oder beide der vorgenannten Anlagekonturen eignet sich hervorragend dazu, dass dort die oder eine Widerstandsschweißverbindung vorgesehen ist.

Erfindungsgemäß ist die Verwendung eines dritten Bauteils vorgesehen, das beispielsweise in der Art eines Niets oder eines Widerlagerbauteils ausgestaltet ist.

Das dritte Bauteil ist erfindungsgemäß an dem ersten Wandabschnitt angeordnet. Das dritte Bauteil steht von dem ersten Wandabschnitt her in den Zwischenraum zu dem zweiten Wandabschnitt vor. Beispielsweise ist eine Öffnung an dem ersten Wandabschnitt vorgesehen, in die das dritte Bauteil eingesteckt ist. In dem Zwischenraum zwischen den beiden Wandabschnitten sind das zweite und das dritte Bauteil miteinander in Kontakt, beispielsweise in Berührkontakt. Dieser Kontakt kann vorzugweise dazu dienen, Energie zur Herstellung der Schweißverbindung zu übertragen.

Das dritte Bauteil kann beispielsweise dazu dienen, das zweite Bauteil in Bezug auf seine Längserstreckungsrichtung an dem Trägerprofil abzustützen, d.h. beispielsweise Zugkräfte aufzunehmen, die das zweite Bauteil von dem Trägerprofil weg belasten. Das dritte Bauteil kann aber auch, insbesondere in Ergänzung zu der vorgenannten Maßnahme oder auch separat und ausschließlich, dazu dienen, das zweite Bauteil quer zu dessen Längserstreckungsrichtung an dem Trägerprofil abzustützen.

Das dritte Bauteil eignet sich auch dazu, das zweite Bauteil umzuformen, beispielsweise um Form-Abschnitte nach radial außen so umzuformen, dass der Formschluss zu dem Trägerprofil hergestellt ist.

Weiterhin kann das dritte Bauteil auch dazu dienen, beispielsweise ausschließlich elektrische Energie oder sonstige Energie zur Herstellung einer Widerstandsschweißverbindung zu übertragen.

Die Erfindung sieht vor, dass die Schweißverbindung oder eine Schweißverbindung, insbesondere die vorgenannte Widerstandsschweißverbindung, zwischen dem zweiten und dem dritten Bauteil angeordnet oder vorgesehen ist.

Erfindungsgemäß ist vorgesehen, dass sich das dritte Bauteil an dem ersten Wandabschnitt abstützt, beispielsweise anhand eines Kragens, eines Flansches oder eines Stützvorsprungs, und mit dem zweiten Bauteil fest verbunden ist, sodass sich das zweite Bauteil über das dritte Bauteil an dem ersten Wandabschnitt abstützt. Die feste Verbindung ist eine Schweißverbindung, insbesondere die bereits erwähnte Widerstandsschweißverbindung.

Zweckmäßigerweise kann ein Ringflansch oder eine Ringkante am Innenumfang des einen Bauteils oder am Außenumfang des anderen Bauteils vorgesehen sein, die bei der Herstellung der Widerstandsschweißverbindung sozusagen aufgebraucht wird. Aber auch einzelne, beispielsweise linienförmige oder punktförmige, nach radial innen oder radial außen vorstehende Vorsprünge können zur Herstellung der Widerstandsschweißverbindung zwischen den beiden Bauteilen vorgesehen sein.

Eine besonders bevorzugte Ausführungsform sieht vor, dass das dritte Bauteil das zweite Bauteil in Richtung des Trägerprofils spannt. Das ist beispielsweise dadurch möglich, dass das dritte Bauteil in erwärmten Zustand mit dem zweiten Bauteil verbunden worden ist, sodass das dritte Bauteil durch eine Abkühlung in den Bereich einer beim Betrieb der Trägeranordnung üblichen Normaltemperatur geschrumpft ist und so das zweite Bauteil in Richtung des Trägerprofils spannt.

Beispielsweise durchsetzen das zweite und das dritte Bauteil voneinander entgegengesetzten Seiten her das Trägerprofil, das heißt den ersten und den zweiten Wandabschnitt, und sind in dem Zwischenraum zwischen den Wandabschnitten miteinander verbunden. Wenn dann eines oder beide der zweiten und dritten Bauteile zunächst erhitzt waren und dann wieder abkühlt, entsteht eine Zugspannung zwischen den beiden miteinander verbundenen Bauteilen, die zu einer Klemmwirkung auf das Trägerprofil führt. Das Trägerprofil ist sozusagen sandwichartig zwischen den beiden zweiten und dritten Bauteilen verspannt.

Das dritte Bauteil kann beispielsweise ein massives Bauteil sein oder aber auch eine Hülse oder ein anderer Hohlkörper. Bevorzugt hatte ein derartiger Hohlkörper oder eine Hülse einen Boden. Dadurch ist eine besonders günstige Herstellung des dritten Bauteils beispielsweise durch Umformung möglich. Zudem erlaubt die Umformung, insbesondere bei einem Hohlkörper mit Boden, dass an dem dritten Bauteilvorsprünge vorgesehen sind, insbesondere in der Art von Verdrehsicherungskonturen. Diese Vorsprünge können dazu dienen, das zweite Bauteil gezielt in Aussparungen am Trägerprofil zu drücken. Die Aussparungen sind beispielsweise nach radial außen vor die Umfangskontur der bereits erläuterten Öffnung beispielsweise an dem zweiten Wandabschnitt vorstehende Aussparungen ausgestaltet.

Weiterhin können die Vorsprünge als Zündhilfen oder "Schweißmittel" dienen, das heißt sie dienen zur Herstellung der oder einer Widerstandsschweißverbindung.

Die Schweißverbindung, insbesondere Widerstandsschweißverbindung, umfasst zweckmäßigerweise mindestens einen linienförmigen oder punktförmigen Schweißverbindungsabschnitt oder ist dadurch gebildet. Mithin sind also relativ schmale oder kurze Schweiß-Verbindungsabschnitte vorgesehen, was die thermische Belastung des zweiten Bauteils oder auch des dritten Bauteils und des Trägerprofils durch die Schweißverbindung gering hält. Verformungen oder Gefügeveränderungen sind dadurch weitgehend vermeidbar.

Zur Herstellung der Schweißverbindung, also der Widerstandsschweißverbindung, eignet sich auch beispielsweise ein Drahtelement, insbesondere ein Drahtelement in Ringform, ein Schweißdraht oder dergleichen, das zwischen die zu verbindenden Komponenten, beispielsweise das zweite und das dritte Bauteil oder das zweite Bauteil und das Trägerprofil gelegt wird und bei Eintrag von elektrischer Schweißenergie schmilzt.

Eine jeweilige zur Widerstandsverschweißung vorgesehene Komponente, beispielsweise das zweite oder dritte Bauteil, das Trägerprofil oder dergleichen, können punktförmige oder linienförmige oder andere Vorsprünge oder Konturen aufweisen, die zur Verdrehsicherung und/oder zur Herstellung der vorgenannten Widerstandsschweißverbindung dienen. Mithin kann also eine Verdrehsicherungskontur beispielsweise zur Herstellung der Widerstandsschweißverbindung abgeschmolzen sein oder werden.
- Figur 1: eine perspektivische Schrägansicht einer ersten Anhängekupplung, deren oberer Teil in
- Figur 2: während der Montage im Querschnitt dargestellt ist,
- Figur 3: eine Querschnittsansicht der fertig montierten gemäß Figur 1, 2, mit einem massiven Widerlagerteil,
- Figur 4: eine Variante der Anhängekupplung gemäß Figur 3, wobei ein drittes Bauteil als ein Widerlagerbauteil in der Art einer Hülse ausgestaltet ist,
- Figur 5: eine weitere Anhängekupplung in perspektivischer Ansicht, von der in
- Figur 6: ein oberer Abschnitt im Querschnitt dargestellt ist,
- Figur 7: eine Variante des Ausführungsbeispiels gemäß Figuren 5, 6, wobei ein drittes Bauteil als ein Widerlagerbauteil ausgestaltet ist,
- Figur 8: eine weitere Variante einer erfindungsgemäßen Anhängekupplung in perspektivischer Darstellung, deren oberer Abschnitt in
- Figur 9: im Querschnitt dargestellt ist,
- Figur 10: eine weitere Anhängekupplung in perspektivischer Darstellung, von der in
- Figur 11: ein Widerlagerteil in der Art einer Hülse mit Boden dargestellt ist,
- Figur 12: eine perspektivische Schrägdarstellung eines Trägerprofils und einer Halterung für eine Anhängekupplung oder einen Lastenträger, die Verdrehsicherungskonturen aufweisen,
- Figur 13: die Halterung aus Figur 12 perspektivisch von schräg oben,
- Figur 14: eine Draufsicht auf eine fertigmontierte Anhängekupplung, mit einem Widerlagerbauteil, dessen Kopf einen kleinen Durchmesser aufweist,
- Figur 15: eine Variante der Anhängekupplung gemäß Figur 14, wobei der Kopf des Widerlagerbauteils eine Abflachung aufweist,
- Figur 16: eine weitere Variante der Anhängekupplung gemäß Figuren 14, 15, wobei der Kopf des Widerlagerbauteil einen großen Durchmesser aufweist, und
- Figur 17: eine perspektivische Schrägansicht der Anhängekupplung gemäß Figur 16.

Bei den nachfolgend erläuterten Ausführungsbeispielen erfindungsgemäßer Trägeranordnungen bzw. Anhängekupplungen und Lastenträgeranordnungen sind gleiche oder gleichartige Komponenten mit denselben Bezugsziffern versehen. Zur Verdeutlichung von Unterschieden sind teilweise die Nummernkreise um jeweils 100 verschieden oder die Ziffern mit zusätzlichen Buchstaben a, b, c, etc. versehen.

Eine Trägeranordnung 10 umfasst beispielsweise einen Querträger 18, der anhand von Seitenträgern 19 am Heck 101 einer Karosserie 102 eines Kraftfahrzeugs 100 befestigt ist. Der Querträger 18 verläuft quer zu einer Fahrzeuglängsrichtung 103 des Kraftfahrzeugs 100, also in einer Querrichtung 104. Die Seitenträger 19 verlaufen etwa in Fahrzeuglängsrichtung 103.

Die Trägeranordnung 10 dient beispielsweise dazu, eine Anhängekupplung 80 zu tragen. Mit anderen Worten könnte die Trägeranordnung 10 auch zusammen mit dem nachfolgend noch erläuterten Kupplungsarm 81 insgesamt als eine Anhängekupplung bezeichnet werden. Der Kupplungsarm 81 ist beispielsweise lösbar an einer Halterung 50 der Trägeranordnung 10 befestigbar.

Die Trägeranordnung 10 eignet sich aber auch alternativ zur Befestigung beispielsweise eines schematisch angedeuteten Lastenträgers 95, der anhand eines oder zweier Kupplungsarme 96 oder Kupplungsträger mit dem Querträger 18 verbindbar ist. Beispielsweise können für die nur schematisch angedeuteten Kupplungsarme 96 Halterungen in der Art der Halterung 50 vorgesehen sein.

Der Querträger 18 umfasst ein Trägerprofil 20, 120, das jeweils einen oberen und einen unteren Wandabschnitt 21, 22 aufweist. Der obere Wandabschnitt 21 bildet in den Worten der Ansprüche einen 1. Wandabschnitt, während der untere Wandabschnitt 22 einen 2. Wandabschnitt darstellt. Dies ist aber nur der Einbaulage des Trägerprofils 20 geschuldet, d.h. dass bei einer anderen Orientierung der Halterung 50 in Bezug auf die Wände des Trägerprofils 20 beispielsweise auch der in Fahrtrichtung hintere Verbindungswandabschnitt 23, der die Wandabschnitte 21, 22 miteinander verbindet, einen sogenannten 2. Wandabschnitt darstellen kann.

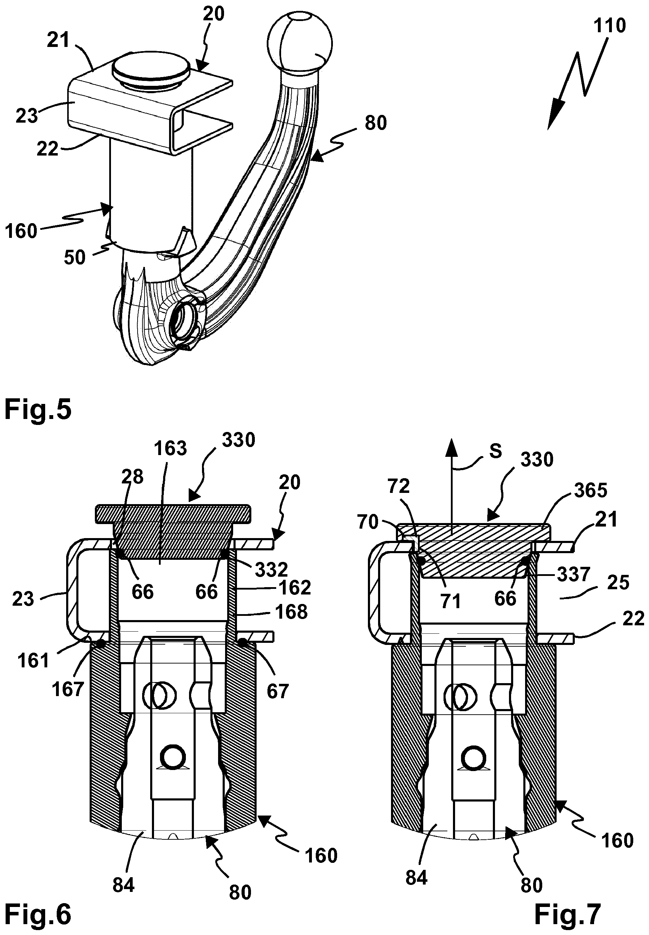

Bei der Trägeranordnung 110 gemäß Figur 5 ist beispielsweise das Trägerprofil 20 bezüglich der Fahrtrichtung oder Fahrzeuglängsrichtung 103 umgekehrt eingebaut als bei der Trägeranordnung 10, sodass dort der Verbindungswandabschnitt 23 in Fahrtrichtung vorn liegt.

Das Trägerprofil 20 ist beispielsweise im Querschnitt U-förmig, an einer Seite also offen. Das Trägerprofil 120 hingegen ist im Querschnitt rechteckig und geschlossen. Das Trägerprofil 120 weist nämlich einen weiteren Verbindungswandabschnitt 24, der die Wandabschnitte 21, 22 miteinander verbindet, auf.

Die Verbindungswandabschnitte 23, 24 gehen beispielsweise über Krümmungsabschnitte 26 in die Wandabschnitte 21, 22 über. An dieser Stelle wird schon deutlich, dass auch andere Profilformen ohne weiteres für das Trägerprofil infrage kommen, also nicht nur das Trägerprofil 20 oder 120, beispielsweise also polygonale oder runde Trägerprofile. Auch runde oder gerundete Trägerprofile weisen nämlich obere und untere Wandabschnitte auf, auch wenn diese möglicherweise gekrümmt sind oder bogenförmig verlaufen.

Die Wandabschnitte 21, 22 dienen zum unmittelbaren Tragen der Halterung 50, die an mindestens einem der Wandabschnitte 21, 22 unmittelbar abgestützt ist. Allerdings erfüllen auch die Verbindungswandabschnitte 23 und/oder 24 eine Tragfunktion, indem sie nämlich die Wandabschnitte 21, 22 stützen und somit das Trägerprofil 20, 220 stabilisieren. Indirekt oder mittelbar stützt sich also die Halterung 50, auch wenn sie sich nur am oberen Wandabschnitt 22 unmittelbar abstützt, über die Verbindungswandabschnitte 23, 24 auch an dem unteren Wandabschnitt 22 ab.

Die Halterung 50 ist beispielsweise rohrförmig. Die Halterung 50 weist beispielsweise eine Steckaufnahme 52 auf, in die ein Steckende 84 des Kupplungsarms 81 einsteckbar ist.

Der Kupplungsarm 81 trägt an seinem freien Ende 82 ein Kuppelstück 83, zum Beispiel eine Kupplungskugel, zum Ankuppeln eines Anhängers oder auch eines Lastenträgers, der auf eine an sich bekannte Anhängekupplung aufgesetzt werden kann, beispielsweise am Kuppelstück 83 befestigt werden kann. Zwischen dem freien Ende 82 und dem Steckende 84 verläuft ein Armabschnitt 85, der je nach geometrischen Verhältnissen des Kraftfahrzeugs 100 bzw. eines nicht dargestellten Stoßfängers unterschiedliche Verläufe aufweisen kann, beim Ausführungsbeispiel mit wenigen Krümmungen, ansonsten im Wesentlichen geradlinig verläuft. Eine relativ scharfe Krümmung ist beispielsweise direkt neben dem Steckende 84 vorgesehen, insbesondere deshalb, weil eine Steckrichtung 93 beim Ausführungsbeispiel im Wesentlichen vertikal orientiert ist. Die Geometrie des Kupplungsarms 81 spielt jedoch hier keine wesentliche Rolle. Ebenso wenig darf das Ausführungsbeispiel so verstanden werden, dass es nur für Anhängekupplungen oder Lastenträger zu verstehen ist, bei denen der Kupplungsarm oder ein Kuppelstück des Lastenträgers lösbar an der Trägeranordnung befestigbar ist. Beweglich gelagerte Kupplungsarme oder Anhängekupplungen oder Aufnahmen für Lastenträger sind ohne weiteres auch im Rahmen der Erfindung zu verstehen, das heißt dass die Halterung beispielsweise ein Schwenklager oder Schiebelager oder beides aufweisen kann.

In einem Gehäuse der Halterung 50, in der Steckaufnahme 52, befindet sich zudem noch ein Aufnahmekörper 54 mit einer Formschlussaufnahme oder mehreren Formschlussaufnahmen 55, die zu einer Verriegelungseinrichtung 94 gehören, mit der der Kupplungsarm 81 oder die Anhängekupplung 80 an der Halterung 50 regelbar ist, vorzugsweise auch verspannbar. Am freien Endbereich, dort wo die Steckaufnahme 52 also offen ist, der Halterung 50 sind Formschlussaufnahmen 55 vorgesehen, in die als Verdrehsicherung 91 ausgestaltete Formschlusskörper am Fußbereich des Steckendes 84 formschlüssig eingreifen.

Die Verriegelungseinrichtung 94 umfasst ferner einen Verdrängerkörper 87, der in einem Kanal 86, welcher im Steckende 84 verläuft, beweglich aufgenommen ist. Der Verdrängerkörper 87 kann Formschlusskörper 88, zum Beispiel Kugeln, Stifte oder dergleichen, nach radial außen aus dem Steckende 84 heraus bewegen, sodass sie in die Formschlussaufnahme 55, zum Beispiel eine Ringnut, formschlüssig eingreifen und vorzugweise dabei noch die Formschlusskörper oder Verdrehsicherung 91 in die Formschlussaufnahmen 55 hinein spannen (in Steckrichtung 93). Die Formschlusskörper 88 sind in radial verlaufenden Kanälen 92 des Steckendes 84 beweglich gelagert. Anhand einer Betätigungshandhabe 89 oder eines motorischen Antriebs kann der Verdrängerkörper 87 in an sich bekannter Weise bewegt werden, beispielsweise parallel zur Steckrichtung 93 linear verstellt werden. Man erkennt, dass durch aufwändige Maßnahmen sichergestellt wird, dass die Anhängekupplung 80, mithin also der Kupplungsarm 81, mit großer Kraft und Zuverlässigkeit mit der Halterung 50 verriegelt und verspannt wird. Daraus wird auch deutlich, dass die Trägeranordnung 10, 110, 210 insbesondere beim Fahrbetrieb des Kraftfahrzeugs 100 große Kräfte aushalten muss, was trotz des nachfolgend erläuterten Leichtbaus ohne weiteres realisiert werden kann.

Im Ausführungsbeispiel ist die Halterung 50 noch als ein Halbzeug oder ein Gusskörper ausgebildet, könnte aber auch ohne weiteres aus Blech bestehen, wie in der eingangs erläuterten Patentanmeldung beschrieben. Gerade dieser Leichtbau eignet sich besonders günstig für die erfindungsgemäße Befestigungstechnik, wie nachfolgend noch deutlich wird.

Die Halterung 50 bildet ein zweites Bauteil 60, das mit dem Trägerprofil 20 fest verbunden ist. Das Bauteil 60 weist einen vor eine Stirnseitenfläche 61 vorstehenden Vorsprung 62 auf, der eine Öffnung 27 am zweiten Wandabschnitt 22 durchsetzt. Der Vorsprung 62 steht in den Zwischenraum 25 vor, wo er mit einem 3. Bauteil 30 verbunden ist.

Das dritte Bauteil 30 ist beispielsweise in der Art eines Niets oder eines Widerlagerkörpers ausgestaltet und durchdringt eine Öffnung 28 am oberen, ersten Wandabschnitt 21. Das dritte Bauteil 30 weist beispielsweise einen Grundkörper 31 auf, dessen in der Zeichnung unterer Bereich einen Verbindungsbereich 32 bildet. Der Verbindungsbereich 32 dient zur Herstellung einer Verbindung mit dem 2. Bauteil 60 in dem Zwischenraum 25.

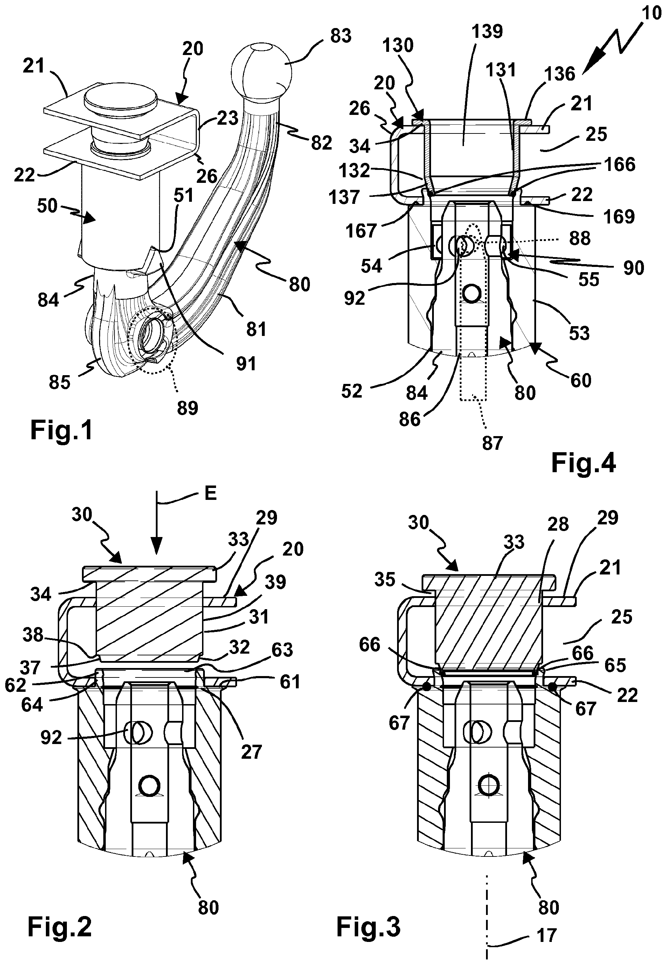

Entgegengesetzt zu dem Verbindungsbereich 32 weist das Bauteil 30 einen Kopf 33 auf, der sich an der von dem Zwischenraum 25 abgewandten obere Seite 29 des Wandabschnitts 21 abstützen könnte, was beispielsweise bei der Variante des 3. Bauteils 30 in Figur 4 der Fall ist. Beim Ausführungsbeispiel gemäß Figuren 1-3 hingegen ist der Kopf 33 in einem Abstand 35 zu der oberen Seite 29 vorgesehen, sodass er das 2. Bauteil nicht bezüglich einer Montageachse 17, entlang derer die Bauteile 30, 60 in die Öffnungen 28, 27 eingesteckt werden, stützend wirkt.

Die Montageachse 17 ist vorliegend eine vertikale Achse oder eine Achse, entlang derer das 2. Bauteil 60 auf Zug bezüglich des Trägerprofils 20 belastet ist. Bei einer beispielsweise horizontal verlaufenden Längsrichtung des Halters 50 würde die Montageachse 17 oder die auf Zug belastete Achsrichtung entsprechend horizontal verlaufen.

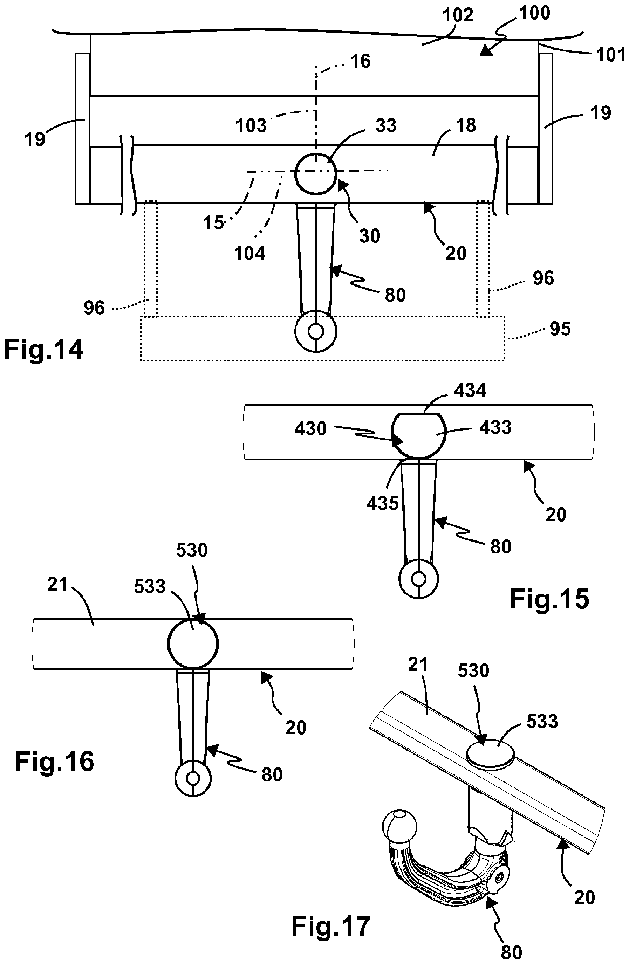

Zweckmäßigerweise liegt das 3. Bauteil 30 mit seinem Außenumfang 39 am Innenumfang der Öffnung 28 formschlüssig an, sodass das Bauteil 30 quer zu der Montageachse 17, beispielsweise entlang von Achsrichtungen 16, 15, die in Figur 14 eingezeichnet sind, stützend wirkt. Die Achsrichtungen 15, 16 verlaufen beispielsweise parallel zu der Fahrzeug-Querrichtung 104 und der Fahrzeuglängsrichtung 103, also beispielsweise in Richtung einer Y-Achse und einer X-Achse, während die Montageachse oder Montageachse 17 einer Z-Achse entspricht (bezogen auf die konkrete Einbausituation der Trägeranordnung 210 bezüglich des Kraftfahrzeugs 100, die bei anderen Kraftfahrzeugen und entsprechend anders angepassten Trägeranordnungen gemäß der Erfindung anders sein kann).

Beim 3. Bauteil 130 ist die Situation beispielsweise so, dass es mit einer Stützfläche 34 eines Flansches oder Kragens 36 auf der oberen Seite 29 aufliegt, also auch bezüglich der Montageachse 17 das 2. Bauteil 60 abstützt.

Weiterhin stützt sich das 2. Bauteil 60 mit der Stirnseitenfläche 61 an der von den Zwischenraum 25 abgewandten Seite des 2. Wandabschnitts 22 (in der Zeichnung unten) ab. Ein Außenumfang 64 des Vorsprung 62 liegt am Innenumfang der Öffnung 27 zweckmäßigerweise formschlüssig an, sodass auch hier eine Abstützung quer zur Montageachse 17, beispielsweise in Bezug auf die Achsrichtungen 15, 16 gegeben ist.

Am freien Endbereich des Vorsprungs 62 befindet sich eine Einstecköffnung 63, in die der Verbindungsbereich 32 eingreift. Am Außenumfang des Verbindungsbereichs 32 ist eine Stufe 37 vorgesehen, sodass zwischen dem Grundkörper 31 und dem Verbindungsbereich 32 eine Ringkante 38 ausgebildet ist.

Der Verbindungsbereich 32 ist so ausgestaltet, dass er beim Eingreifen in die Einstecköffnung 63 deren Randbereich oder Kragen 65 nach radial außen verformt (erkennbar beispielsweise in Figur 3), sodass der Kragen 65 sozusagen den inneren Randbereich der Öffnung 27 und somit den 2. Wandabschnitt 22 klammerartig umgreift.

Nun wäre eine Ausführungsform denkbar, bei der allein dieser formschlüssige Halt ausreicht. Das stellt an sich schon eine eigenständige Erfindung dar. Zusätzlich ist jedoch beim Ausführungsbeispiel noch eine Widerstandsschweißverbindung 66 vorgesehen, die durch ein Abschmelzen der Ringkante 38 bewirkt ist. Wenn nämlich das 2. Bauteil 30 mit elektrischer Schweißenergie beaufschlagt wird (dargestellt anhand eines Pfeils E) schmilzt die Ringkante 38, also ein Vorsprung, ab und sorgt dafür, dass eine Schweißverbindung zwischen dem 2. Bauteil 30 und dem 3. Bauteil 60 hergestellt ist.

Eine optionale oder alternative Maßnahme stellt es dar, wenn beispielsweise eine weitere Widerstandsschweißverbindung 67 zwischen der Stirnseitenfläche 61 und der freien Außenseite des Wandabschnitts 22 hergestellt ist. Dazu ist beispielsweise auch an der Stirnseitenfläche 61 eine Art ringförmiger Vorsprung vorgesehen, der bei entsprechendem Energieeintrag abschmilzt. Denkbar wäre aber auch ein Draht, der in den Zwischenraum zwischen der Stirnseitenfläche 61 und dem Wandabschnitt 22 eingelegt ist und bei entsprechendem Energieeintrag abschmilzt und somit eine Schweißverbindung zwischen der Stirnseitenfläche 61 und dem Wandabschnitt 22 herstellt.

Das in Figur 4 dargestellte 3. Bauteil 130 ist im Gegensatz zu dem 3. Bauteil 30 als ein Hohlkörper ausgestaltet. Ein Grundkörper 131 weist eine hülsenartige Grundstruktur auf und kann optional einen Boden aufweisen. Eine Umfangswand des Grundkörpers 131 begrenzt einen Innenraum 139. Die Umfangswand liegt zweckmäßigerweise formschlüssig am Innenumfang der Öffnung 28 an. Ein Kragen 136 steht nach radial außen vor und dient zur Abstützung an dem oberen oder 1. Wandabschnitt 21. Unten, an einem Verbindungsbereich 132, sind Schrägflächen 137 vorgesehen, beispielsweise ein Konus, die das Einstecken in die Einstecköffnung 63 erleichtern. Die Schrägflächen 137 dienen auch dazu, den Kragen 65 am Vorsprung 62 aufzuweiten, so dass dieser den Innenumfang der Öffnung 28 formschlüssig und/oder in der Art einer Klammer umgreift.

Eine Widerstandsschweißverbindung 166 am Verbindungsbereich 32, nämlich im Bereich der konischen Schrägflächen 137, ist beispielsweise dadurch gebildet, dass nach radial außen vor den Verbindungsbereich 32, also in dem Kontaktbereich zu dem Kragen 65, ein vor dem Schweißvorgang ringförmiger oder teilringförmiger Umfangsvorsprung vorgesehen ist, der sozusagen abschmilzt oder zündet, wenn die Widerstandsschweißung vorgenommen wird und somit eine Verschweißung mit dem Innenumfang des Kragens 65 hervorruft.

Diese Maßnahme ist insbesondere auch an der Stirnseitenfläche 61, das heißt neben dem Vorsprung 62 bevorzugt. Dort ist eine weitere Widerstandsschweißverbindung 167 vorgesehen, die beispielsweise dadurch erzielt wird, dass oben vor die Stirnseitenfläche 61 ein ringförmiger oder höckerartiger Vorsprung 169 vorsteht, der durch Einbringen elektrischer Schweißenergie (entsprechend dem Pfeil E) insbesondere auf oder in das 3. Bauteil 130 abschmilzt und die Widerstandsschweißverbindung 167 erzeugt.

Bei allen vorgenannten Maßnahmen wird deutlich, dass insbesondere im Bereich des Aufnahmekörpers 54 keine oder wenig Wärme durch die Herstellung der Widerstandsschweißverbindungen 66, 67 oder 166, 167 entsteht. Die Halterung 50 wird also dort nicht oder wenig verformt, was sich sehr positiv auf die Maßhaltigkeit bzw. Maßgenauigkeit der Formschlussaufnahme 55 auswirkt. Zudem sind die Verbindungen hoch belastbar, da nämlich eine Kombination aus Widerstandsverschweißung und Formschluss einen optimalen Halt gewährleistet.

Bei der Trägeranordnung 110 gemäß Figuren 5 und 6 ist der Halter 50 von einem 2. Bauteil 160 gebildet, das mit seiner Stirnseitenfläche 161 an der Außenseite (von dem Zwischenraum 25 abgewandten Seite) des Trägerprofils 90 anliegt bzw. dort sich abstützt. Dort ist eine Widerstandsschweißverbindung 167 zweckmäßigerweise vorgesehen, jedoch nicht unbedingt nötig (das gilt auch für die Widerstandsschweißverbindung 67 bei den vorgenannten Ausführungsbeispielen).

Ein Vorsprung 162 steht jedoch nicht nur knapp vor die Innenseite des Wandabschnitts 22 vor, also nur wenig weit in den Zwischenraum 25 hinein, sondern erstreckt sich bis zur dem Zwischenraum 25 zugewandten Innenseite des 1. Wandabschnitts 21. Dort ist eine weitere Schweißverbindung vorgesehen, allerdings nicht, jedenfalls nicht unbedingt, mit dem Wandabschnitt 21, sondern mit einem 3. Bauteil 330. Das 3. Bauteil 330 ist ähnlich wie die anderen dritten Bauteile 30, 130 durch die Öffnung 28 hindurch gesteckt und steht mit seinem Verbindungsbereich 332 bis zu einer Einstecköffnung 163 des 2. Bauteils 160 vor. Durch Schrägflächen 337 kann, wie in Figur 7 dargestellt, ein Wandabschnitt 168 des Vorsprung 162 nach radial außen verdrängt werden, sodass er sich beispielsweise an der dem Zwischenraum 25 zugewandte Innenseite des 1. Wandabschnitts 21 abstützt. Das kann, muss aber nicht sein. Jedenfalls ist eine Schweißverbindung in Gestalt einer Widerstandsschweißverbindung 66 zwischen dem 3. Bauteil 230 und dem 2. Bauteil 160 vorgesehen.

Wie das 3. Bauteil 30 gemäß Figur 2 oder 3 muss sich das 3. Bauteil 330 nicht auf der dem Zwischenraum 25 abgewandten Außenseite des 1. Wandabschnitts 21 abstützen, was in Figur 5 und 6 dargestellt ist.

Bei dem Ausführungsbeispiel gemäß Figur 7 hingegen ist das 3. Bauteil 330 sozusagen vollständig in die Einstecköffnung 63 eingesteckt, jedenfalls so weit, dass sich sein Kragen 365 auf der freien Außenseite des Wandabschnitts 21 abstützt. Man erkennt, dass die beispielsweise konischen Schrägflächen 337 dafür sorgen, dass das freie Ende des Vorsprungs 62 nach außen verdrängt wird, sodass es formschlüssig an der dem Zwischenraum 25 zugewandten Innenseite des Wandabschnitts 21 anliegt.

Eine besonders bevorzugte Variante der Erfindung sieht vor, dass beispielsweise die 3. Bauteile 130, 330, zunächst erwärmt werden, bevor sie in die jeweiligen 2. Bauteile 60, 160 eingesteckt werden. Wenn dann die 3. Bauteile 130, 330 wieder abkühlen, sorgt dies für eine Zugspannung in Richtung eines Pfeiles S in Figur 7, d.h. dass die 3. Bauteile 130, 330 sozusagen die 2. Bauteile 60, 160 in Richtung des Trägerprofils 20 spannen. Dadurch ist ein Kraftschluss erzielt. Der Formschluss ist in dieser Variante optional, jedoch zweckmäßig.

Bei dem Ausführungsbeispiel gemäß Figur 7 ist noch eine weitere Variante realisiert, nämlich dass beispielsweise der Vorsprung 362 sogar noch die in der Zeichnung obere Öffnung, nämlich die Öffnung 28 des 1. Wandabschnitts 21 durchdringt und vor den Wandabschnitt 21 bzw. die Öffnung 28 vorsteht. Das 3. Bauteil 330 kann dann beim Einstecken in die Einstecköffnung 63 den vor die Oberseite oder freie Seite 29 des 1. Wandabschnitts 21 vorstehenden Abschnitt des Vorsprungs 62 nach radial außen verdrängen, so dass er sich mit einem Stützabschnitt 70 an der oberen Seite oder äußeren Seite 29 des Wandabschnitts 21 abstützt. Der Stützabschnitt 70 umfasst einen Schenkel 71, der an dem Innenumfang der Öffnung 28 anliegt, sowie einen Schenkel 72, der auf der freien Seite oder oberen Seite 29 aufliegt.

Durch diese Konstruktion wird deutlich, dass eine Verschweißung mit der Widerstandsschweißverbindung 66 auch eine optionale Maßnahme darstellen kann. Allein schon durch die Umformung oder Verformung des 2. Bauteils 60 wird ein optimaler Halt erzielt. Auch allein anhand des Kraftschlusses, der durch eine Verspannung erzielt wird, ist auch ohne eine Widerstandsverschweißung ein optimaler Halt möglich.

Wenn die Kombination Kraftschluss und Formschluss vorgesehen ist, ist es prinzipiell auch denkbar, dass die Widerstandsverschweißung oder jede andere Verschweißung obsolet ist, also nicht notwendig. Es wäre zum Beispiel auch denkbar, dass das 3. Bauteil und das 2. Bauteil miteinander verschraubt werden, solange sie noch heiß oder jedenfalls warm sind und durch die anschließende Abkühlung eine Spannung im Sinne eines Anziehens an das jeweilige Trägerprofil, beispielsweise das Trägerprofil 20, erzielt ist. Dies wäre zum Beispiel bei dem Ausführungsbeispiel gemäß Figur 7 ohne weiteres denkbar, wobei anstelle der Widerstandsschweißverbindung 66 eine Verschraubung gesehen sein könnte.

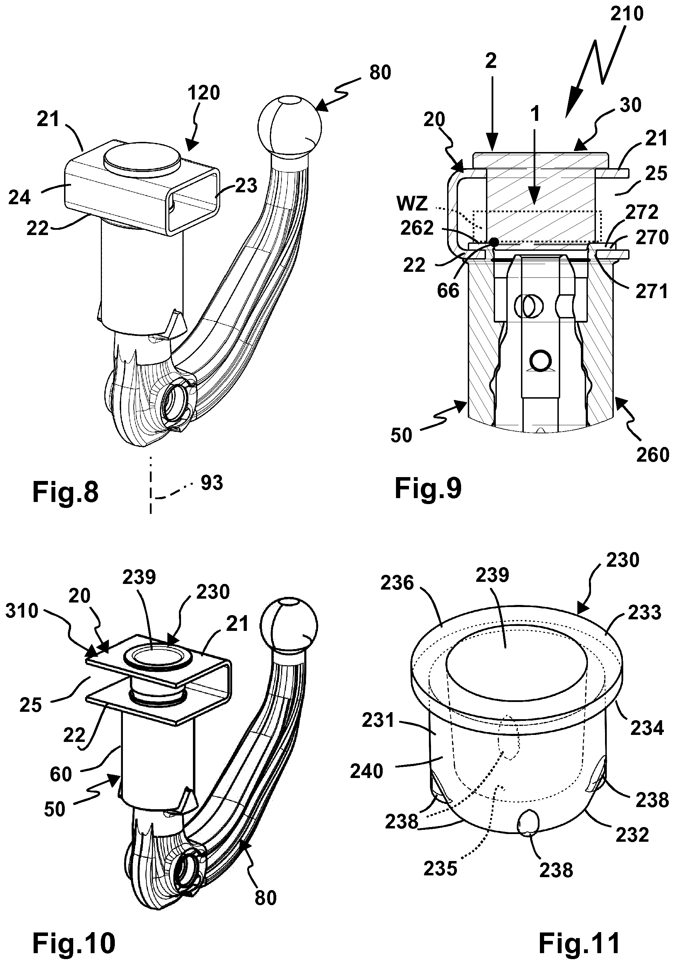

Die konstruktiven Maßnahmen bzw. die Umformung/Verformung zur Herstellung des Formschlusses mit einem Wandabschnitt eines Trägerprofils, die bei dem Ausführungsbeispiel gemäß Figur 7 im Zusammenhang mit der oberen Wand bzw. dem 1. Wandabschnitt 21 erläutert worden sind, können selbstverständlich auch im Bereich des in der Zeichnung unteren, 2. Wandabschnitts 22 vorteilhaft zur Anwendung kommen. Das ist in Figur 9 dargestellt.

Bei einem 2. Bauteil 260 ist der Vorsprung 262, der die Öffnung 27 durchdringt und in den Zwischenraum 25 vorsteht in formschlüssigem Eingriff mit dem 2. Wandabschnitt 22. Ein Stützabschnitt 270 des Vorsprungs 262 weist einen Schenkel 271 auf, der am Innenumfang der Öffnung 27 anliegt oder sich dort abstützt. Ein weiterer Schenkel 272 liegt sozusagen an der Innenseite des Wandabschnitts 22, jedenfalls der Wandfläche im Zwischenraum 25, vorzugsweise flächig und formschlüssig, an.

Zur Herstellung des Stützabschnitts 270 könnte beispielsweise unmittelbar das 3. Bauteil 30 dienen. Dieses wäre aber möglicherweise nicht dazu geeignet, die relativ weit über die Öffnung 27 auskragenden Schenkel 272 auszubilden oder diese so zu formen. Zweckmäßigerweise ist daher ein separater Arbeitsgang vorgesehen, der durch einen Pfeil 1 signalisiert ist, wobei bei diesem Arbeitsgang ein Umformwerkzeug WZ die formschlüssigen Stützkonturen des Stützabschnitts 270 herstellt. In einem 2. Arbeitsgang, angedeutet durch einen Pfeil 2, wird das 3. Bauteil 30 montiert und die Widerstandsschweißverbindung 66 hergestellt.

Bei der Trägeranordnung 310 gemäß Figur 10 ist beispielsweise das 2. Bauteil 60, also der Halter 50, anhand eines 3. Bauteils 230 mit dem Trägerprofil 20 verbunden. Das 3. Bauteil 230 weist beispielsweise einen Grundkörper 231 auf, an dem ein Kopf 233 vorgesehen ist. Der Kopf 233 dient zur Abstützung an dem Trägerprofil 20, beispielsweise dem oberen Wandabschnitt 21. Dort kann er sich mit seiner Unterseite, nämlich einer Stützfläche 234, abstützen. Der Kopf 233 umfasst beispielsweise einen Kragen 236, der nach radial außen vor den Grundkörper 231 vorsteht. Der Grundkörper 231 ist beispielsweise als ein Tiefziehteil, durch Kaltfließpressen oder dergleichen hergestellt. Bei dem 3. Bauteil 230 handelt es sich also vorzugsweise um ein Umformteil, wobei auch ein Gussteil oder Schmiedeteil, Dreh- und/oder Fräs-Teil ohne weiteres möglich wären.

Eine Umfangswand 240 begrenzt einen Innenraum 239. Weiterhin wird der Innenraum 239 durch eine Bodenwand 235 begrenzt. Diese Konstruktion hat auch den Vorteil, dass an einem Verbindungsbereich 232, nämlich einem unteren, abgeschrägten Bereich, Vorsprünge 238 in der Art von beispielsweise Nasen, Höckern oder dergleichen leicht herstellbar sind, die den Kragen 65 des 2. Bauteils 60 weiter nach radial außen aufweiten als die benachbarten Abschnitte des Verbindungsbereichs 232, wodurch eine Verdrehsicherung geschaffen ist. Zudem oder alternativ zu der Funktion als Verdrehsicherung können die Vorsprünge 238 auch vorteilhaft dazu dienen, lokale Widerstandsschweißverbindungen auszubilden.

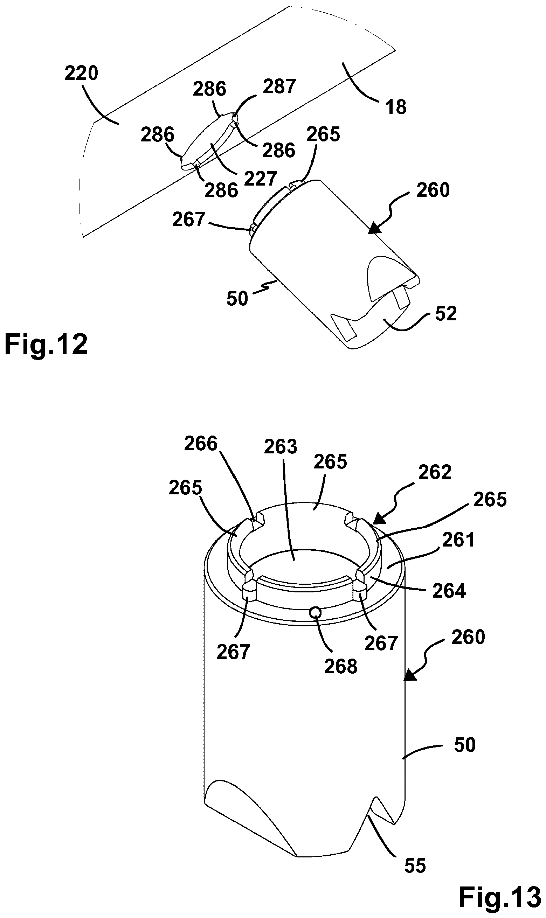

Die Vorsprünge 238 können auch dazu dienen, beispielsweise das nachfolgend beschriebene 2. Bauteil 260 verdrehsicher in der Öffnung 227 des Trägerprofils 220 gemäß Figur 12 zu halten und/oder die Herstellung lokaler Widerstandsschweißverbindungen zu ermöglichen oder zu erleichtern.

An einer Öffnung 227 des Trägerprofils 220, das als Querträger 18 dient, sind als Verdrehsicherungskonturen 286 mehrere Aussparungen vorgesehen. Die Verdrehsicherungskonturen 186 stehen nach radial außen vor einen Innenumfang 287 der Öffnung 227 vor.

Selbstverständlich könnten auch nach radial innen vorstehende Vorsprünge am Innenumfang 287 als Verdrehsicherung dienen. Weiterhin eignet sich auch eine Abflachung am Innenumfang einer Öffnung, jedenfalls eine polygonale oder nicht runde oder unrunde Kontur dazu, ein jeweiliges 2. oder 3. Bauteil verdrehsicher an einem Trägerprofil zu befestigen.

An einem Vorsprung 262, der vor eine Stirnseite oder Stirnseitenfläche 261 des 2. Bauteils 260 vorsteht, sind mehrere Aussparungen 266 vorgesehen, sodass der Vorsprung 262 in Ringsegmente 265 aufgeteilt ist. Die Ringsegmente 265 lassen sich durch ein 3. Bauteil, beispielsweise das 3. Bauteil 30, aber auch das 3. Bauteil 230, leichter nach radial außen verdrängen, um in formschlüssigen Eingriff mit dem 2. Wandabschnitt 22 zu gelangen. Das jeweilige 3. Bauteil 30, 230 wird beispielsweise in eine Einstecköffnung 263 eingesteckt, wobei die Ringsegmente 265 nach radial außen umgeformt werden.

Zur Herstellung beispielsweise einer Widerstandsschweißverbindung in der Art der Widerstandsschweißverbindungen 66 dienen beispielsweise die vorgenannten Vorsprünge 238, alternativ oder ergänzend aber auch Vorsprünge 267, die beispielsweise bei der Herstellung der Aussparungen 266 ausgebildet sind. Die Vorsprünge 267, beispielsweise in der Art von kleinen Nasen, stehen nach radial außen vor den Vorsprung 262 vor und sind somit oberhalb der Stirnseitenfläche 261 angeordnet. Dort könnte auch mindestens ein anderer, sozusagen als Zündhilfe bzw. als Material für eine Widerstandsschweißung dienender Vorsprung 268 vorgesehen sein.

Die Ausbildung eines jeweiligen Kopfes eines 3. Bauteiles kann optimal darauf abgestimmt sein, wie die Lastverteilung auf das Trägerprofil gewünscht ist. So ist beispielsweise der Kopf 33 so schmal ausgewählt, dass er im Wesentlichen nur die obere Seite 29 des Trägerprofils 20 belastet.

Bei einem in Figur 15 dargestellten Kopf 433 eines 3. Bauteils 430 ist eine Abflachung 434 vorgesehen. Dementsprechend belastet der Kopf 233 mit seinem vorderen Bereich 435 die in Fahrtrichtung hintere Wand, nämlich den Verbindungswandabschnitt 23, während der in Fahrtrichtung vordere Verbindungswandabschnitt 24 aufgrund der Abflachung 234 nicht oder weniger belastet ist. Es ist auch möglich, dass in Fahrtrichtung vorn bei beispielsweise einem U-förmigen Trägerprofil gar kein Verbindungsabschnitt vorhanden ist. In diesem Fall ist die Abflachung 434 besonders günstig.

Ein Kopf 533 eines 3. Bauteils 530 hingegen hat eine relativ große Ausdehnung, steht also vorzugsweise bis zu den Verbindungswandabschnitten 23, 24 vor, sodass auch diese die Belastung durch die Halterung 50 zusätzlich tragen können und nicht die gesamte Belastung unmittelbar auf die obere Wand oder den Wandabschnitt 21 wirkt.

## Patentansprüche

1. Trägeranordnung für eine Anhängekupplung (80) oder einen Lastenträger, als Bauteile mindestens umfassend einen Querträger (18) zur Montage an einem Heck einer Karosserie eines Kraftfahrzeugs (100) sowie mindestens eine an dem Querträger (18) angeordnete Halterung (50) für eine Anhängekupplung (80) oder für ein Kupplungsteil eines Lastenträgers, wobei die Trägeranordnung (10) mindestens zwei durch eine Schweißverbindung verbundene Komponenten aufweist, wobei die Trägeranordnung (10) mindestens ein Trägerprofil (20), insbesondere ein Profilrohr, mit einem ersten Wandabschnitt (21) und mit einem zweiten Wandabschnitt (22) in einem Abstand zu dem ersten Wandabschnitt (21) aufweist, sodass ein Zwischenraum (25) zwischen dem ersten Wandabschnitt (21) und dem zweiten Wandabschnitt (22) vorhanden ist, und wobei an dem Trägerprofil (20) ein zweites Bauteil (60), insbesondere die Halterung (50), befestigt ist, wobei die Schweißverbindung eine Widerstandsschweißverbindung (66, 67) ist und zur Verbindung des zweiten Bauteils (60) mit dem Trägerprofil (20) dient, wobei ein drittes Bauteil (30) an dem ersten Wandabschnitt (21) angeordnet ist und von dem ersten Wandabschnitt (21) her in den Zwischenraum (25) zu dem zweiten Wandabschnitt (22) vorsteht, und wobei das zweite und das dritte Bauteil (30) in dem Zwischenraum (22) miteinander in Kontakt sind, **dadurch gekennzeichnet, dass** sich das dritte Bauteil (30) an dem ersten Wandabschnitt anhand eines Kragens (36), eines Flansches oder eines Stützvorsprungs abstützt und mit dem zweiten Bauteil (60) anhand einer Schweißverbindung fest verbunden ist, sodass sich das zweite Bauteil (60) über das dritte Bauteil (30) an dem ersten Wandabschnitt (21) abstützt.

2. Trägeranordnung nach Anspruch 1, **dadurch gekennzeichnet, dass** das zweite Bauteil (60) kraftschlüssig und/oder formschlüssig mit dem Trägerprofil (20), insbesondere im Bereich der Schweißverbindung, verbunden ist.

3. Trägeranordnung nach Anspruch 1 oder 2, **dadurch gekennzeichnet, dass** zur Herstellung der formschlüssigen Verbindung zwischen dem zweiten Bauteil (60) und dem Trägerprofil (20) ein Abschnitt des zweiten Bauteils (60) oder des Trägerprofils (20) in Richtung des jeweils anderen Bauteils umgeformt ist oder zur kraftschlüssigen Verbindung zwischen dem zweiten Bauteil (60) und dem Trägerprofil (20) das Trägerprofil (20) und/oder das zweite Bauteil (60) oder ein das jeweilige Bauteil haltendes drittes Bauteil (30) erhitzt oder abgekühlt mit der jeweils anderen Komponente verbunden worden ist.

4. Trägeranordnung nach einem der vorhergehenden Ansprüche, **dadurch gekennzeichnet, dass** das zweite Bauteil (60) und/oder das Trägerprofil (20) derart umgeformt sind, dass die jeweils andere Komponente in der Art einer Klammer umgriffen ist.

5. Trägeranordnung nach einem der vorhergehenden Ansprüche, **dadurch gekennzeichnet, dass** das zweite Bauteil in den Zwischenraum (25) zwischen dem ersten Wandabschnitt (21) und dem zweiten Wandabschnitt (22) vorsteht oder den Zwischenraum (25) zwischen dem ersten und dem zweiten Wandabschnitt (22) durchsetzt.

6. Trägeranordnung nach einem der vorhergehenden Ansprüche, **dadurch gekennzeichnet, dass** an dem Trägerprofil (20), insbesondere dem zweiten Wandabschnitt (22), eine Öffnung (27) vorgesehen ist, in die das zweite Bauteil (60) in Richtung des Zwischenraums (25) zwischen dem ersten Wandabschnitt (21) und dem zweiten Wandabschnitt (22) eingreift.

7. Trägeranordnung nach einem der vorhergehenden Ansprüche, **dadurch gekennzeichnet, dass** das zweite Bauteil (60) eine Anlagekontur, insbesondere eine Stufe, aufweist, und mit einem ersten Abschnitt der Anlagekontur an einer von dem Zwischenraum (25) abgewandten Außenseite des zweiten Wandabschnitts (22) und vorteilhaft mit einem zweiten Abschnitt der Anlagekontur an einem Innenumfang der Öffnung (27) anliegt.

8. Trägeranordnung nach einem der vorhergehenden Ansprüche, **dadurch gekennzeichnet, dass** das zweite Bauteil (60) an den ersten Wandabschnitt (21) und das, insbesondere als ein Widerlagerbauteil ausgestaltete, dritte Bauteil (30) an dem ersten Wandabschnitt (21) angeordnet sind, wobei das zweite und das dritte Bauteil (30) in dem Zwischenraum (25) zwischen den Wandabschnitten (22) in Kontakt, insbesondere in einer festen Verbindung, miteinander sind.

9. Trägeranordnung nach Anspruch 8, **dadurch gekennzeichnet, dass** das dritte Bauteil (30) zur Übertragung von Energie für die Herstellung der Schweißverbindung vorgesehen ist und/oder zur Umformung des zweiten Bauteils (60) im Sinne einer formschlüssigen Anlage an dem Trägerprofil (20) vorgesehen ist.

10. Trägeranordnung nach Anspruch 8 oder 9, **dadurch gekennzeichnet, dass** die Schweißverbindung oder eine Schweißverbindung zwischen dem dritten Bauteil (30) und dem zweiten Bauteil (60) und/oder zwischen einer Stützkontur des zweiten Bauteils (60), mit der das zweite Bauteil (60) an dem Trägerprofil (20) anliegt, und dem Trägerprofil (20) vorgesehen ist.

11. Trägeranordnung nach einem der Ansprüche 8 bis 10, **dadurch gekennzeichnet, dass** das dritte Bauteil (30) das zweite Bauteil (60) in Richtung des Trägerprofils (20) spannt oder in formschlüssigem Eingriff mit dem Trägerprofil (20) hält und/oder dass das dritte Bauteil (30) in erwärmtem Zustand mit dem zweiten Bauteil (60) verbunden worden ist, sodass das dritte Bauteil (30) durch eine Abkühlung in den Bereich einer beim Betrieb der Trägeranordnung (10) üblichen Normaltemperatur geschrumpft ist und das zweite Bauteil (60) in Richtung des Trägerprofils (20) spannt.

12. Trägeranordnung nach einem der vorhergehenden Ansprüche, **dadurch gekennzeichnet, dass** die Schweißverbindung mindestens einen linienförmigen oder punktförmigen Schweißverbindungsabschnitt umfasst oder dadurch gebildet ist und/oder die Schweißverbindung anhand eines Schweißdrahts gebildet ist und/oder mindestens eine der anhand der Widerstandsschweißverbindung (66, 67) miteinander zu verbindenden Komponenten einen Vorsprung oder eine Erhöhung aufweist.

13. Trägeranordnung nach einem der vorhergehenden Ansprüche, **dadurch gekennzeichnet, dass** mindestens ein Bauteil (30), insbesondere das zweite oder das dritte Bauteil (30), von einem Hohlkörper, insbesondere aus Blech, gebildet ist oder einen derartigen Hohlkörper aufweist.

14. Trägeranordnung nach einem der vorhergehenden Ansprüche, **dadurch gekennzeichnet, dass** zwischen dem Trägerprofil (20) und dem zweiten Bauteil (60) und/oder einem das zweite Bauteil mit dem Trägerprofil (20) verbindenden dritten Bauteil (30) mindestens eine Verdrehsicherungskontur vorgesehen ist, wobei die mindestens eine Verdrehsicherungskontur zweckmäßigerweise zur Herstellung der Widerstandsschweißverbindung (66, 67) ausgestaltet ist.

## Claims

1. Support assembly for a trailer coupling (80) or a load carrier, as components comprising at least one cross-member (18) for fitting to a rear section of a body of a motor vehicle (100), together with at least one mounting (50) for a trailer coupling (80) fitted to the cross-member (18) or for a coupling part of a load carrier, wherein the support assembly (10) has at least two components connected by a welded joint, wherein the support assembly (10) has at least one support profile (20), in particular a profile tube, with a first wall section (21) and with a second wall section (22) at a distance from the first wall section (21), so that a space (25) is made between the first wall section (21) and the second wall section (22), and wherein a second component (60), in particular the mounting (50), is attached to the support profile (20), wherein the welded joint is a resistance-welded joint (66, 67) and serves to join the second component (60) to the support profile (20), wherein a third component (30) is provided on the first wall section (21) and protrudes from the first wall section (21) into the space (25) towards the second wall section (22), and wherein the second and the third component (30) are in contact with one another in the space (25), **characterised in that** the third component (30) rests on the first wall section with the aid of a collar (36), a flange or a support projection and is permanently joined to the second component (60) with the aid of a welded joint, so that the second component (60) rests on the first wall section (21) via the third component (30).

2. Support assembly according to claim 1, **characterised in that** the second component (60) is frictionally or positively connected to the support profile (20), in particular in the area of the welded joint.

3. Support assembly according to claim 1 or 2 **characterised in that**, to create the positive connection between the second component (60) and the support profile (20), a section of the second component (60) or of the support profile (20) is reshaped in the direction of the other respective component, or for the frictional connection between the second component (60) and the support profile (20), the support profile (20) and/or the second component (60) or a third component (30) holding the respective component has been connected to the other respective component, heated or cooled.

4. Support assembly according to any of the preceding claims, **characterised in that** the second component (60) and/or the support profile (20) are or is reshaped in such a way that the respective other component is encompassed in the manner of a clip.

5. Support assembly according to any of the preceding claims, **characterised in that** the second component protrudes into the space (25) between the first wall section (21) and the second wall section (22) or passes through the space (25) between the first and the second wall section (22).

6. Support assembly according to any of the preceding claims, **characterised in that** on the support profile (20), in particular the second wall section (22), an opening (27) is provided in which the second component (60) engages in the direction of the space (25) between the first wall section (21) and the second wall section (22).

7. Support assembly according to any of the preceding claims, **characterised in that** the second component (60) has a lay-on contour, in particular a step, and with a first section of the lay-on contour abuts an outer side of the second wall section (22) facing away from the space (25), and advantageously with a second section of the lay-on contour abuts an inner periphery of the opening (27).

8. Support assembly according to any of the preceding claims, **characterised in that** the second component (60) is located on the first wall section (21) and the third component (30), in particular as a thrust bearing component, is located on the first wall section (21), wherein the second and the third component (30) are in contact with one another in the space (25) between the wall sections (22), in particular in a fixed connection.

9. Support assembly according to claim 8, **characterised in that** the third component (30) is provided for the transfer of energy for creation of the welded joint and/or for reshaping of the second component (60) for the purpose of positive contact with the support profile (20).

10. Support assembly according to claim 8 or 9, **characterised in that** the welded joint or a welded joint is provided between the third component (30) and the second component (60) and/or between a support contour of the second component (60) with which the second component (60) abuts the support profile (20), and the support profile (20).

11. Support assembly according to any of claims 8 to 10, **characterised in that** the third component (30) clamps the second component (60) in the direction of the support profile (20) or holds it in positive engagement with the support profile (20), and/or that the third component (30) has been connected to the second component (60) in the heated state, so that the third component (30) shrinks due to cooling in the range of a normal temperature usual in operation of the support assembly (10) and clamps the second component (60) in the direction of the support profile (20).

12. Support assembly according to any of the preceding claims, **characterised in that** the welded joint includes or is formed by at least one linear or spot-like section, and/or the welded joint is formed with the aid of a welding wire, and/or at least one of the components to be joined together with the aid of the resistance-welded joint (66, 67) has a projection or an elevation.

13. Support assembly according to any of the preceding claims, **characterised in that** at least one component (30), in particular the second or the third component (30), is formed by a hollow body, in particular of sheet metal, or has such a hollow body.

14. Support assembly according to any of the preceding claims, **characterised in that** there is provided between the support profile (20) and the second component (60) and/or a third component (30) connecting the second component to the support profile (20) at least one anti-twist-lock contour, wherein the anti-twist-lock contour or contours is or are designed expediently to create the resistance-welded joint (66, 67).

## Revendications

1. Système de support pour un attelage (80) ou un porte-charge, comprenant comme composants au moins une traverse (18) pour le montage sur un hayon d'une carrosserie d'un véhicule automobile (100) ainsi qu'au moins un support (50) agencé au niveau de la traverse (18) pour un attelage (80) ou pour une partie d'attelage d'un porte-charge, dans lequel le système de support (10) présente au moins deux composants raccordés par une liaison soudée, dans lequel le système de support (10) présente au moins un profil de support (20), en particulier un tube profilé, avec une première section de paroi (21) et avec une seconde section de paroi (22) à une distance de la première section de paroi (21) de sorte qu'un espace intermédiaire (25) entre la première section de paroi (21) et la seconde section de paroi (22) soit présent, et dans lequel au profil de support (20) un deuxième composant (60), en particulier le support (50), est fixé, dans lequel la liaison soudée est une liaison soudée à résistance (66, 67) et sert à la liaison du deuxième composant (60) avec le profil de support (20), dans lequel un troisième composant (30) est agencé au niveau de la première section de paroi (21) et dépasse de la première section de paroi (21) dans l'espace intermédiaire (25) vers la seconde section de paroi (22), et dans lequel le deuxième et le troisième composant (30) sont en contact l'un avec l'autre dans l'espace intermédiaire (22), **caractérisé en ce que** le troisième composant (30) s'appuie contre la première section de paroi au moyen d'un collet (36), d'une bride ou d'une saillie d'appui et est fixement raccordé au deuxième composant (60) au moyen d'une liaison soudée de sorte que le deuxième composant (60) s'appuie par le biais du troisième composant (30) contre la première section de paroi (21).

2. Système de support selon la revendication 1, **caractérisé en ce que** le deuxième composant (60) est raccordé à force et/ou à complémentarité de formes au profil de support (20), en particulier dans la zone de la liaison soudée.

3. Système de support selon la revendication 1 ou 2, **caractérisé en ce que**, pour l'établissement de la liaison à complémentarité de formes entre le deuxième composant (60) et le profil de support (20), une section du deuxième composant (60) ou du profil de support (20) est transformée en direction de l'autre composant respectif ou, pour la liaison à force entre le deuxième composant (60) et le profil de support (20), le profil de support (20) et/ou le deuxième composant (60) ou un troisième composant (30) maintenant le composant respectif a été raccordé à l'autre composant respectif en étant chauffé ou refroidi.

4. Système de support selon l'une quelconque des revendications précédentes, **caractérisé en ce que** le deuxième composant (60) et/ou le profil de support (20) est déformé de telle manière que l'autre composant respectif soit entouré comme une agrafe.

5. Système de support selon l'une quelconque des revendications précédentes, **caractérisé en ce que** le deuxième composant dépasse dans l'espace intermédiaire (25) entre la première section de paroi (21) et la seconde section de paroi (22) ou traverse l'espace intermédiaire (25) entre la première et la seconde section de paroi (22).

6. Système de support selon l'une quelconque des revendications précédentes, **caractérisé en ce qu'**au niveau du profil de support (20), en particulier la seconde section de paroi (22), une ouverture (27) est prévue, avec laquelle le deuxième composant (60) vient en prise en direction de l'espace intermédiaire (25) entre la première section de paroi (21) et la deuxième section de paroi (22).

7. Système de support selon l'une quelconque des revendications précédentes, **caractérisé en ce que** le deuxième composant (60) présente un contour d'appui, en particulier un étage, et repose avec une première section du contour d'appui contre un côté extérieur opposé à l'espace intermédiaire (25) de la seconde section de paroi (22) et avantageusement avec une seconde section du contour d'appui contre une périphérie intérieure de l'ouverture (27).

8. Système de support selon l'une quelconque des revendications précédentes, **caractérisé en ce que** le deuxième composant (60) est agencé au niveau de la première section de paroi (21) et le troisième composant (30) configuré en particulier comme un composant de contre-palier, au niveau de la première section de paroi (21), dans lequel le deuxième et le troisième composant (30) sont en contact l'un avec l'autre, en particulier dans une liaison fixe, dans l'espace intermédiaire (25) entre les sections de paroi (22).

9. Système de support selon la revendication 8, **caractérisé en ce que** le troisième composant (30) est prévu pour la transmission d'énergie pour l'établissement de la liaison soudée et/ou pour la transformation du deuxième composant (60) au sens d'un appui à complémentarité de formes contre le profil de support (20).

10. Système de support selon la revendication 8 ou 9, **caractérisé en ce que** la liaison soudée ou une liaison soudée est prévue entre le troisième composant (30) et le deuxième composant (60) et/ou entre un contour d'appui du deuxième composant (60) avec lequel le deuxième composant (60) repose contre le profil de support (20), et le profil de support (20).

11. Système de support selon l'une quelconque des revendications 8 à 10, **caractérisé en ce que** le troisième composant (30) serre le deuxième composant (60) en direction du profil de support (20) ou le maintient en prise à complémentarité de forme avec le profil de support (20) et/ou que le troisième composant (30) a été raccordé à l'état chauffé au deuxième composant (60) de sorte que le troisième composant (30) soit rétréci par un refroidissement dans la zone d'une température normale usuelle lors du fonctionnement du système de support (10) et serre le deuxième composant (60) en direction du profil de support (20).

12. Système de support selon l'une quelconque des revendications précédentes, **caractérisé en ce que** la liaison soudée comporte au moins une section de liaison soudée linéaire ou ponctuelle ou est formée ainsi et/ou la liaison soudée est formée au moyen d'un fil de soudage et/ou au moins un des composants à raccorder entre eux au moyen de la liaison soudée à résistance (66, 67) présente une saillie ou une élévation.

13. Système de support selon l'une quelconque des revendications précédentes, **caractérisé en ce qu'**au moins un composant (30), en particulier le deuxième ou le troisième composant (30), est formé par un corps creux, en particulier en tôle ou présente un corps creux de la sorte.

14. Système de support selon l'une quelconque des revendications précédentes, **caractérisé en ce que**, entre le profil de support (20) et le deuxième composant (60) et/ou un troisième composant (30) raccordant le deuxième composant au profil de support (20), au moins un contour anti-rotation est prévu, dans lequel l'au moins un contour anti-rotation est configuré de manière appropriée pour l'établissement de la liaison soudée à résistance (66, 67).
